# EUROPEAN PATENT SPECIFICATION

(11) **EP 0 985 066 B1**
(45) Date of publication and mention of the grant of the patent: **05.02.2003**
(21) Application number: 98922476.1
(22) Date of filing: 21.05.1998
(51) Int. Cl.: D06M 15/03, C03C 25/10, G02B 6/44, H01B 7/28

(54) **FIBER COATED WITH WATER BLOCKING MATERIAL**
MIT WASSERBLOCKIERENDEM MATERIAL BESCHICHTETE FASER
FIBRE ENROBEE D'UNE MATIERE ETANCHE A L'EAU

(30) Priority: 26.05.1997 EP 97108489; 26.08.1997 EP 97114780
(43) Date of publication of application: 15.03.2000
(73) Proprietor: E.I. DUPONT DE NEMOURS AND COMPANY, Wilmington, Delaware 19898 (US); ROBLON A/S, DK-9900 Frederikshavn (DK)
(72) Inventor: OLESEN, John, DK-9900 Frederikshavn (DK); PFISTER, Fred, V., CH-1217 Meyrin (CH); REBOUILLAT, Serge, F-01170 Echenevex (FR)
(74) Representative: Beacham, Annabel Rose
(86) International application number: US9810468
(87) International publication number: WO98054395

(56) References cited:
- WO-A-88/10156
- WO-A-95/25605
- DE-A- 2 406 343
- DE-A- 3 532 254
- DE-A- 4 137 480
- US-A- 3 276 885
- US-A- 4 265 672

## Description

### BACKGROUND OF THE INVENTION

### 1. Field of the Invention

The present invention relates to the use of a water blocking material in the form of a surface coating on a substrate. The substrate may be used in a fiber optic cable to prevent water ingression into the cable.

### 2. Description of the Related Art

Many processes for the treatment of substrates with water blocking materials are known. In particular fibers, fibrous materials or yarns are impregnated with water blocking materials in certain applications where water is undesirable.

For example, water blocking materials are used in fiber optic cables to prevent ingression and propagation of water in the cable. Fiber optic cables are normally made by surrounding wave guides with reinforcing fibers that prevent elongation of the cable, and those reinforcing fibers are then encased in plastic. If water enters the fiber optic cable, it migrates inside the cable, usually longitudinally by capillary action, until the water contacts the sensitive wave guides. The wave guides are made of glass, and when contacted by water become dull. The efficiency of the signal transmission through the wave guide drops until the wave guides can no longer transmit a signal. When that happens, the damaged portion of the cable must be located and then replaced. Since these fiber optic cables may be buried underground or may be placed along the bottom of large bodies of water, the location and replacement of the damaged sections of the cable can be time consuming and expensive.

As a result of these problems, there have been developed numerous methods to protect the fiber optic cable from water ingression. One method has been to coat the surrounding reinforcing fibers with a water blocking material so that if water should leak through the plastic casing, that water will be absorbed by the water blocking material on the reinforcing fibers to prevent damage to the wave guides.

There are processes in which the treatment of fibers is carried out with water blocking material as an aqueous dispersion such as in EP-A-0 351 100. One disadvantage of this process is that the viscosity of these aqueous dispersions is very high.

In EP- A-0 666 243, a method is disclosed in which glass fiber bundles are treated with a dispersion of a water absorbing material in an oil, wherein poly(sodium acrylate) is the water absorbing medium. In the same way derivatives of polyacrylic acid are disclosed in WO93/18223 as super-absorbing materials. In both cases, the water blocking materials are used in water-in-oil emulsions for the treatment of substrates, with the super-absorbing materials being contained in the aqueous phase. These emulsions are, however, complicated to manufacture and require the use of emulsifying agents.

US 3,276,885 discloses permanent finishes for cellulosic articles, the finishes comprising the reaction product of galacto-mannite and glyoxal. DE-A 4137840 discloses roller blind fabrics coated with a film-forming aqueous paste made from galactomannans.

In general, conventional water blocking materials are based on cross linked polyacrylics and/or cross linked polyacrylates, such as water-in-oil emulsions. These types of water blocking materials all contain water and oil, and when the material is applied to a fiber or yarn some of the water and oil must be removed. The removal of water and oil is an additional processing step that is energy intensive, limits productivity and is an environmental burden.

What is needed, therefore, is a water blocking agent that is effective and is easy to apply to fibers.

### SUMMARY OF THE INVENTION

The present invention relates to a fiber coated with a water blocking material that includes water-free polygalactomannan. The fibers made according to this invention may be used, for example, as fiber reinforcing material used in the manufacture of electrical cables, and in particular in yarns for fiber optical cables that use optical light wave guides for optical communication transmissions.

### DETAILED DESCRIPTION

The present invention relates to a fiber coated with a water blocking material that includes water-free polygalactomannan. The water blocking material of the present invention is easily applied to the surface of fibers, has a good water blocking action, and does not impair the mechanical characteristics of the fiber. The fibers are usually used in the form of multi-filament yarns or fibrous materials such as nonwoven or other textile structures.

As used herein, the term "polygalactomannan" includes any galactomannan and/or any polygalactomannan that swells upon contact with water, including all polysaccharides that are constructed of mannose and galactose building blocks and also have other sugar building blocks to a subordinate extent. Depending on the source, there is a relatively large number of galactomannans. They originate primarily from the endosperm portions of seeds of various legumes, such as guar, carob, tara, Cassiu occidentalis, flame tree (literal), Sesbania cannubia, Sesbania aculeata, Sesbania egyptiaca and honey beans (literal). Polygalactomannan deriviatives that may be used in this invention include those disclosed in US 4,745,184, and include hydroxyalkyl ethers of polygalactomannans, e.g. hydroxypropyl ethers and hydroxyethyl ethers, carboxy alkyl ethers of polygalactomannans, e.g. carboxymethyl ethers and carboxyethyl ethers, mixed carboxyalkyl- and hydroxyalkyl-substituted polygalactomannans, depolymerized polygalactomannans and quaternary ammonium ethers of polygalactomannans.

Polygalactomannan in the form of carob flour or guar flour may be used as the polygalactomannan, with guar flour being preferred [CAS number 9000-30-0]. In order to more easily apply the polygalactomannan to a fiber, the polygalactomannan is dispersed in a dispersing medium and applied to the fiber as a dispersion. The dispersing medium may be an oil, an organic solvent or glycol.

After the polygalactomannan dispersion is applied to the fiber, the dispersing medium may either remain on the fiber or may be removed. The inventive water blocking material is water-free, which makes the material simpler to apply and simpler to use than water-in-oil based acrylic water blocking materials that require water to be removed as one step in applying the acrylic water blocking material to a fiber.

The polygalactomannan should be present on the coated fiber in an amount of from 0.05 to 10.0 weight percent based upon the weight of the uncoated fiber. A range of 0.1 to 5.0 weight percent is preferred because below 0.1 weight percent the water blocking effect may be insufficient in certain uses and above 5.0 weight percent the processability of the yarn can become more difficult because of deposit formation, for example. While it is possible to use higher loadings of the polygalactomannan, such higher loadings are not practical. If the fiber includes a sizing agent that is added prior to treatment of the fiber with the polygalactomannan dispersion, then the values for the percentage by weight refer to the dry weight of the untreated fiber without the sizing agent.

The polygalactomannan is preferably in the form of particles having a diameter of from 0.5 to 300 microns, preferably 0.5 to 60 microns, and more preferably from 0.5 to 15 microns. In its natural state the particle size of polygalactomannan may be greater than the more preferred diameter of 0.5 to 15 microns in which case the polygalactomannan particles may be reduced in size using conventional dry or wet micronizing techniques.

It is known in the art that polygalactomannans may be used as water absorbing agents. However, polygalactomannan flours and flours of polygalactomannan derivatives cause considerable problems when dissolved in water as a result of excessive lumping, especially when the individual particles are fine (particle diameters less than 100 microns). These problems originate because when the particles contact water, a gel layer forms very rapidly on the surface of the individual particles or aggregates of particles and prevents the water from further penetrating to other particles. This leads to the formation of lumps which are difficult and time-consuming to dissolve further.

It has been discovered that the problem of lumping or aggregate formation associated with using polygalactomannans having particle diameters of less than 100 microns may be overcome by dispersing the polygalactomannans in a dispersing medium, such as an oil, an organic solvent, or glycol.

The oils which may be used in a polygalactomannan-oil dispersion include mineral oils, vegetable oils, and fully synthetic oils. Example of acceptable oils are Shellsol D 100® available from Shell Chemicals and Clairsol 350® available from Gropa A/S.

Other oils which may be used are those disclosed in US 5,139,873 and US 5,270,113. For example, US 5,270,113 discloses a finish oil composition that includes 30-70 % by weight of an esteroil lubricant composed of an alcohol and a carboxylic acid, 20-50% by weight of an emulsifying system composed of unstaturated ethoxylated fatty acids or alcohols or ethoxylated alkylamines, 5-15% of an antistatic agent, 0.2-2% of a corrosion inhibitor, and optionally other additives. These oils may also include hydrophobic active ingredients such as ketene dimers as disclosed in US 5,275,625. These oils are preferred if the oil from the polygalactomannan-oil dispersion is to remain on the fiber after the fiber is coated with the dispersion. These oils advantageously contribute to the water blocking action of the polygalactomannan by allowing water to diffuse more easily between and among the polygalactomannan particles. Other advantages of these oils are that they enhance the processability of the coated fiber and they provide antistatic protection to the fiber.

Preferably, the kinematic viscosity of the oil ranges between 20 to 200 mm²/sec (at 20C), more preferably from 50 to 150 mm²/sec (at 20C).

Examples of suitable organic solvents include toluene, trichloroethane, dichloromethane and alcohols such as isopropyl alcohol. Other organic solvents may be used provided such solvents have densities similar to toluene, trichloroethane or dichloromethane.

The glycol dispersing medium may be ethylene glycol or propylene glycol. Further, the glycol may include an ethylene propylene oxide emulsifying agent.

As used herein, the term "fiber" includes fibers composed of organic and inorganic materials. As organic fibers one may use natural and synthetic fibers. Examples for natural organic fibers are cellulose fibers, wool fibers, silk fibers. Examples for synthetic organic fibers are rayon fibers, fibers of regenerated cellulose, aliphatic and aromatic polyamides, polyesters, polyolefines, polyacrylonitriles, polyvinyl chlorides, polyvinyl alcohols, and the like. Examples for inorganic fibers are glass fibers, carbon fibers, metal fibers, ceramic fibers, mineral fibers, boron fibers and the like. Preferred fibers include glass fibers, aramid fibers, nylon fibers, polyester fibers, such as fibers of poly(ethylene terephtalate) and polymethacrylates, and cellulose fibers including ones of regenerated cellulose.

For use in fiber optic cables, the fibers should have a specific breaking strength of 2.65 to 33.5 cN/dtex (3 to 38 g/den) and a specific modulus of 8.83 to 2297 cN/dtex (10 to 2500 g/den)..

Aramid fibers are fibers of polymers that are partially, preponderantly or exclusively composed of aromatic rings, which are connected through carbamide bridges or optionally, in addition also through other bridging structures. The structure of such aramids may be elucidated by the following general formula of repeating units:

(-NH-A1-NH-CO-A2-CO)n

wherein A1 and A2 are the same or different and signify aromatic and/or polyaromatic and/or heteroaromatic rings, that may also be substituted. Typically A1 and A2 may independently from each other be selected from 1,4-phenylene, 1,3-phenylene, 1,2-phenylene, 4,4'-biphenylene, 2,6-naphthylene, 1,5-naphthylene, 1,4-naphthylene, phenoxyphenyl-4,4'-diyelen, phenoxyphenyl-3,4'-diylen, 2,5-pyridylene and 2,6-quinolylene which may or may not be substituted by one or more substituents which may comprise halogen, C1-C4-alkyl, phenyl, carboalkoxyl, C1-C4-alkoxyl, acyloxy, nitro, dialkylamino, thioalkyl, carboxyl and sulfonyl. The -CONH- group may also be replaced by a carbonyl-hydrazide (-CONHNH-) group, azo-or azoxygroup.

Further useful polyamides are disclosed in U.S. Pat. No. 4,670,343 wherein the aramid is a copolyamide in which preferably at least 80% by mole of the total A1 and A2 are 1,4-phenylene and phenoxyphenyl-3,4'-diylene which may or may not be subsituted and the content of phenoxyphenyl-3,4'-diylene is 10% to 40% by mole.

Fibers derived from wholly aromatic polyamides are preferred.

Examples of aramids are poly-m-phenylene-isophthalamide and poly-p-phenylene-terephthalamide.

Additional suitable aromatic polyamides are of the following structure

(-NH-Ar1-X-Ar2-NH-CO-Ar1-X-Ar2-CO-)n

in which X represents O, S, SO2, NR, N2, CR2, CO

R represents H, C1-C4-alkyl and Ar1 and Ar2 which may be same or different are selected from 1,2-phenylene, 1,3-phenylene and 1,4-phenylene and in which at least one hydrogen atom may be substituted with halogen and/or C1-C4-alkyl.

Additives may be used with the aramid and, in fact, it has been found that up to as much as 10% by weight, of other polymeric materials may be blended with the aramid or that copolymers may be used having as much as 10% of other diamine substituted for the diamine of the aramid or as much as 10% of other diacid chloride substituted for the diacid chloride of the aramid.

It is also possible to use fibers comprising mixtures of the above materials including hybrid fibers. Furthermore, two-component fibers may also be used in accordance with the invention, in which the core consists of a different material from the skin.

The fibers of the invention may be round, flat or may have another cross-sectional shape or they may be hollow fibers. Further, the term "fiber" includes endless fibers (filaments) and short fibrous structures, microfibers and multi-filaments. Further, the fibers may be made into yarns of short fibrous structures, which are spun, as well as yarns of endless fibers. The fibers may used to make fibrous materials in woven, knitted or nonwoven form such as including fleeces, wadding, and felt.

The fibers coated with the water blocking material of this invention have an excellent water blocking effect because the polygalactomannan applied to the fiber swells when contacted with water and thus prevents further penetration of the water along the fibers. The mechanical characteristics of the fiber are not impaired by the polygalactomannan deposited on it. Since a good water blocking action is already achieved with small quantities of polygalactomannan on the surface of the fiber, the weight and volume of the fiber do not substantially increase so that the coated fibers may be used in the same applications as uncoated fibers. Furthermore, polygalactomannans are environmentally friendly materials.

The fibers made according to this invention may be used, for example, as fiber reinforcing material used in the manufacture of cables, and in particular of fiber optical cables that use optical light wave guides for optical communication transmissions. In fiber optic cables, multi-filaments of glass, aramids or other strength members are used as tensile load relief fibers or as reinforcing fibers. However, the fibers of the invention are not limited to these uses and may be used in any application where it is desired to absorb water in order to hinder the propagation of the water.

After the polygalactomannan dispersion has been applied to the surface of a fiber, the dispersing medium may subsequently be removed from the fiber. In most cases if the dispersing medium is an organic solvent it is removed, and if the dispersing agent is a glycol it remains on the fiber. If the dispersing medium is an oil, excess oil may be removed from the fiber or the oil may remain on the fiber. By "excess oil" is meant that oil which is removed from a fiber coated by the dispersing medium after the fiber has been subjected to conventional oil removal techniques, such as heating. Even when the coated fiber has been subjected to oil removal techniques, some residual oil remains on the fiber.

If the oil remains on the fiber, the oils advantageously contribute to the water blocking action of the polygalactomannan.

The option to remove the excess oil or not will be based in part on the selected coating process and/or on the design of the fiber optic cable. For example, it is clear to one skilled in the art that in the cases where the fiber optic cables require only a low density of fiber reinforcement surrounding the wave guides, enhanced water blocking protection must be provided. Therefore in some cases it is preferable to keep the coating as applied without removing any oil to help prevent the formation of gel aggregates in the coating through which leakage may occur. On the other hand, when tight cable configurations are designed, that is, cables which have a higher density of fiber reinforcement to protect the wave guides, one may use polygalactomannan coated fiber after the excess oil has been removed.

The dispersion of the polygalactomannan in the dispersing medium contains from 0.1 to 70 % by weight of polygalactomannan, preferably from 20 to 40%, based upon the total weight of dispersing medium and polygalactomannan only. Higher loadings of the polygalactomannan may be used, but become impractical because the stability of the dispersion decreases. The quantity of the polygalactomannan within the indicated range is selected in depending on the viscosity of the oil that is used so as to achieve a good coating of the dispersion on the surface of the fiber. This is especially important when the fiber is in the form of a yarn, multi-filament or fibrous material, because when the water blocking material is applied to these materials it is desired to obtain the best penetration into the yarn or bundles of yarn in order to coat as many fibers as possible.

The dispersion may be made simply by adding the polygalactomannan in powder form into the dispersing medium while stirring the dispersing medium at a rate that insures a uniform distribution of the polygalactomannan into the dispersing medium. If an impregnating bath is used to coat the fiber by passing the fiber through the bath, then the dispersion is continuously held in motion, for example by stirring.

The size of the fibers for many applications, such as for use in fiber optic cables, is in the range of from 10 to 15 microns, and therefore the polygalactomannan particles should have a size in the range from 0.5 to 300 microns, preferably 0.5 to 60 microns, and more preferably from 0.5 to 15 microns. The smallest size of commercially available polygalactomannan is 60 microns (270 US mesh) but it has been discovered that if such particles are ground, either when dry or in a dispersing medium, acceptable smaller size particles are obtained.

The dispersion may be applied to the fiber by any conventional coating process, for example by roll coating with or without doctor blade, spray coating, immersion coating, a serpentine system, or using a finish application (e.g. metering system), or using any other known coating devices. If desired the dispersion may be applied in a multi step process in which the fiber is coated several times with the dispersion. Ultrasonic systems may also be used in order to enhance the uniformity or penetration of the dispersion. With fibers, it is preferred to use an immersion coating method in which the oil dispersion is present in an impregnating bath and the fibers to be treated are passed through the bath. However, at higher coating speeds the metering applicator may be preferred. With fibrous materials of two-dimensional form, other processes such as spray coating may be used in addition to immersion coating.

The coating speed may be adjusted between 5 and 1200 m/min depending on the selected process. A process in which the dispersing medium, such as the oil, is not removed, has the additional advantage of significantly increasing the coating speed, and thus the productivity, since one can coat the fiber at high speeds without being limited by the residence time required to evaporate the dispersing medium. Typical speeds are 60 m/min for the fiber treatment other than during the spinning process, and 800 m/min for the coating speed during the manufacturing of the fiber.

Polymeric fibers are known to absorb moisture. Therefore it is preferred to determine the moisture level of the fiber before coating, and, if necessary, to precondition the fiber in order to feed a fiber having a moisture level of 5% or less to the coating process. This may easily be achieved by conventional fiber drying techniques, or advantageously during the spinning of the fiber.

The temperature of the dispersion may be selected in order to enhance the fiber penetration and coverage uniformity and is only limited by the temperature resistance of the dispersion components. Nonetheless a range of 10 to 100C is preferred, with a range of from 35 to 75C being more preferred.

If it is desired to remove excess oil from the fiber, the fiber may be dried after the coating process in order to remove the excess oil. This drying may be carried out by conventional processes such as vaporisation drying, evaporative drying, contact drying, radiation drying and the like. It is preferred to use evaporative drying, in which hot air is used to evaporate and remove the excess oil. The hot air may be supplied by an oven. The drying process should be operated at a temperature in the range from 50C to 300C, and preferably 90C to 250C and a pressure which avoids charring the polygalactomannan. After the removal of the excess oil the fiber may be wound directly in single or multiple ends onto a bobbin.

The coating process of the invention may be integrated into a continuous operation for the manufacture of the bare fiber or may be carried out separately from the spinning process. With an integrated operation the fibers may be supplied to a unit for the coating process of the invention directly after spinning, washing and drying. The coating process may also occur during the manufacturing of a fiber optic cable.

If the dispersing medium is removed from the fiber, the oil saturated air of the dryer is preferably supplied to a condenser where the oil may be collected and reused to make the inventive dispersion. The recycling of the oil used in the dispersion reduces the costs of operation and also prevents entry of the oil into the environment.

The invention will be explained in more detail with reference to the following examples.

### EXAMPLES

### EXAMPLE 1

A fiber in the form of a 2400 tex E-glass multi-filament yarn was guided with a speed of 30m/min through an impregnating bath. This impregnating bath contained 2 % by weight of guar flour (type Vidogum G200-1® of Unipektin AG, Zürich), suspended in 98 % by weight of oil (Clairsol 35O® of Gropa A/S, Copenhagen). The particle size of the guar flour was approximately 60 - 100 microns. This oil dispersion was continually stirred in the impregnating bath.

The E-glass multi-filament yarn had, prior to treatment, a dry weight of 2.426 g/m, and a silane sizing agent was present on the filaments.

This silane sizing agent was removed on guiding the multi-filament yarn through the impregnating bath. Without the silane sizing agent, the E-glass multi-filament yarn had a dry weight of 2.403 g/ m.

After passing through the impregnating bath, the E-glass multi-filament yarn coated with the dispersion was led through a hot air stove, which had a temperature of 190C. The dried multi-filament yarn had a weight of 2.411 g/m, so that 0.33 % by weight of guar flour had been deposited on the surface of the multi-filament yarn.

The swelling ability of this E-glass multi-filament yarn coated with guar flour was investigated. For this purpose the multi-filament yarn was introduced in double form (2 ends) into a test tube with an internal diameter of 2 mm and a length of 50 mm. A 1 m water column was arranged above the test tube. The water was coloured with a dye. After 24 hours the test tube was separated from the water column. It could be seen that no water had passed through the multi-filament yarn in the test tube. Uncoated multi-filament yarn in double form (2 ends) in the same column passes water within few minutes.

### EXAMPLE 2

A finish free yarn of para-aramid fibers (Kevlar® type 49, 1580 dtex), comprising poly-para-phenylene diamine terephthalamide was treated with a dispersion of 35% (by weight) guar flour particles in a finish oil as disclosed in US 5,270,113. The guar particles were previously micronized to a diameter range of 5 - 15 microns by passing the guar-oil dispersion through a Megatron MT5000 micronizer as commercially available from Kinematica A.G. The main component of finish oil was an esteroil lubricant synthesized from an alcohol and a carboxylic acid, and had suitable hydrophilic properties to allow rapid spreading of water among polygalactomannan particles thereby enhancing the water blocking effect of the polygalactomannan.

The so obtained para-aramid yarn, coated with the mentioned dispersion, was tested as in Example 1, but the oil phase was not removed from the coating.

The yarn coated with the dispersion had a particle concentration of 3% on the dry weight of the uncoated yarn. The coated yarn was tested for water blocking performance under 1 meter water column in a test device as in Example 1 except that the test was conducted with a test tube of 50 mm length and 5 mm internal diameter, filled with 100 ends of the yarn. Effective water blocking activity was still maintained after 3 weeks. When the column density was reduced by 10% (by taking 10% of the yarns out of the test tube) the yarn resisted the one meter water pressure for 3 days, which is still considered very good water blocking performance in the fiber optics industry.

### COMPARATIVE EXAMPLE 3

Kevlar® 49 yarn, 1580 dtex, was treated with 1% finish oil as in Example 2, but without the guar flour particles. The water blocking performance of the yarn was measured in a 1 meter water column test device as in Example 2, using the same amount of yarn, and after 2 minutes the yarn did not block the water but let it run through the column.

### EXAMPLE 4

In the following examples, a yarn of aramid fibers, Kevlar® 49, 1580 dtex, is coated with a dispersion of 35% (by weight) guar flour particles in a finish oil as disclosed in US 5,270,113. The polygalactomannan has a particle size about 60 microns. The dispersion is coated on the yarn in the amounts indicated below, and the coated yarn is tested for water blocking performance using a 1 meter water column test device as in Example 2, using the same amount of yarn.

The results are as follows:

| Coating | Percent weight of polygalactomannan on fiber | water blocking result |
|---|---|---|
| guar flour | 0.1 | acceptable |
| guar flour | 5.0 | acceptable |
| guar flour | 10.0 | acceptable |

### EXAMPLE 5

In the following examples, a yarn of aramid fibers, Kevlar® 49, 1580 dtex yarn, is coated with a dispersion as in Example 4 except that the polygalactomannan has a particle size of about 10 microns. The dispersion is coated on the yarn in the amounts indicated below, and the coated yarn is tested for water blocking performance using a 1 meter water column test device as in Example 2, using the same amount of yarn.

The results are as follows:

| Coating | Percent weight of polygalactomannan on fiber | water blocking result |
|---|---|---|
| guar flour | 0.1 | acceptable |
| guar flour | 5.0 | acceptable |
| guar flour | 10.0 | acceptable |

## Claims

1. A fiber coated with a water blocking material comprising water swellable polygalactomannan, said polygalactomannan being water-free.

2. The fiber of claim 1, wherein the polygalactomannan is carob flour, guar flour or mixtures thereof.

3. The fiber of claim 1 or claim 2, wherein the polygalactomannan is present in an amount of from 0.05 to 10 weight percent based upon the weight of the uncoated fiber.

4. The fiber of claim 1 or claim 2, wherein the polygalactomannan is present in an amount of from 0.1 to 5 weight percent based upon the weight of the uncoated fiber.

5. The fiber of any of claims 1 to 4, wherein the polygalactomannan is in the form of particles having a diameter of from 0.5 to 300 microns.

6. The fiber of any of claims 1 to 4, wherein the polygalactomannan is in the form of particles having a diameter of from 0.5 to 60 microns.

7. The fiber of any of claims 1 to 4, wherein the polygalactomannan is in the form of particles having a diameter of from 0.5 to 15 microns.

8. The fiber of any of claims 1 to 7, wherein the polygalactomannan is dispersed in a dispersing medium.

9. The fiber of claim 8, wherein the dispersing medium is an oil, an organic solvent or a glycol.

10. The fiber of any of claims 1 to 9, wherein the fiber is a glass fiber, an aramid fiber, or blends thereof.

11. The fiber of any of claims 1 to 9, wherein the fiber includes poly(p-phenylene terephthalamide).

12. A yarn comprising a plurality of the fibers of any of claims 1 to 11.

13. A fibrous material comprising a plurality of the fibers according to any of claims 1 to 11.

14. A fiber optical cable comprising glass fiber wave guides, said guides surrounded with a yarn comprising a fiber according to any of claims 1 to 11.

15. A method for coating a fiber with a water blocking material comprising providing a fiber and applying a dispersion of a water swellable polygalactomannan in an organic dispersing medium to the surface of the fiber, said polygalactomannan being water-free.

16. The method of claim 15, further comprising the step of removing the dispersing medium from the fiber.

17. The method of claim 15 or claim 16, further comprising applying the dispersion of a polygalactomannan in a dispersing medium to the surface of the fiber such that the amount of polygalactomannan on the fiber is from 0.05 to 10 weight percent based on the weight of the uncoated fiber.

18. The method of any of clams 15 to 17, comprising providing a dispersion which includes 0.5 to 70 weight percent polygalactomannan.

19. The method of any of claims 15 to 18, further comprising providing a dispersion wherein the polygalactomannan is in the form of particles having a diameter of from 0.5 to 300 microns.

20. Use of water swellable polygalactomannan as a water blocking material to coat a fiber, said polygalactomannan being water-free.

21. Use in accordance with claim 20, wherein the polygalactomannan is dispersed in an oil.

## Revendications

1. Fibre enrobée avec un matériau bloquant l'eau comprenant une polygalactomannane gonflable dans l'eau, ladite polygalactomannane étant exempte d'eau.

2. Fibre suivant la revendication 1, dans laquelle la polygalactomannane est une farine de caroube, une farine de guar ou des mélanges de celles-ci.

3. Fibre suivant la revendication 1 ou la revendication 2, dans laquelle la polygalactomannane est présente dans une quantité de 0,05 à 10 pour-cent en poids sur la base du poids de la fibre non enrobée.

4. Fibre suivant la revendication 1 ou la revendication 2, dans laquelle la polygalactomannane est présente dans une quantité de 0,1 à 5 pour-cent en poids sur la base du poids de la fibre non enrobée.

5. Fibre suivant l'une quelconque des revendications 1 à 4, dans laquelle la polygalactomannane est sous la forme de particules possédant un diamètre de 0,5 à 300 microns.

6. Fibre suivant l'une quelconque des revendications 1 à 4, dans laquelle la polygalactomannane est la forme de particules possédant un diamètre de 0,5 à 60 microns.

7. Fibre suivant l'une quelconque des revendications 1 à 4, dans laquelle la polygalactomannane est sous la forme de particules possédant un diamètre de 0,5 à 15 microns.

8. Fibre suivant l'une quelconque des revendications 1 à 7, dans laquelle la polygalactomannane est dispersée dans un milieu dispersant.

9. Fibre suivant la revendication 8, dans laquelle le milieu dispersant est une huile, un solvant organique ou un glycol.

10. Fibre suivant l'une quelconque des revendications 1 à 9, dans laquelle la fibre est une fibre de verre, une fibre d'aramide ou des mélanges de celles-ci.

11. Fibre suivant l'une quelconque des revendications 1 à 9, dans laquelle la fibre inclut du poly(p-phénylène téréphtalamide).

12. Fil comprenant une pluralité des fibres suivant l'une quelconque des revendications 1 à 11.

13. Matériau fibreux comprenant une pluralité des fibres suivant l'une quelconque des revendications 1 à 11.

14. Câble de fibres optiques comprenant des guides d'ondes de fibres de verre, lesdits guides étant entourés d'un fil comprenant une fibre suivant l'une quelconque des revendications 1 à 11.

15. Procédé pour enrober une fibre avec un matériau bloquant l'eau comprenant la fourniture d'une fibre et l'application d'une dispersion d'une polygalactomannane gonflable dans l'eau dans un milieu dispersant organique sur la surface de la fibre, ladite polygalactomannane étant exempte d'eau.

16. Procédé suivant la revendication 15, comprenant en outre l'étape consistant à retirer le milieu dispersant de la fibre.

17. Procédé suivant la revendication 15 ou la revendication 16, comprenant en outre l'application de la dispersion d'une polygalactomannane dans un milieu dispersant sur la surface de la fibre, de sorte que la quantité de polygalactomannane sur la fibre est de 0,05 à 10 pour-cent en poids sur la base du poids de la fibre non enrobée.

18. Procédé suivant l'une quelconque des revendications 15 à 17, comprenant la fourniture d'une dispersion qui inclut de 0,5 à 70 pour-cent en poids de polygalactomannane.

19. Procédé suivant l'une quelconque des revendications 15 à 18, comprenant en outre la fourniture d'une dispersion dans laquelle la polygalactomannane est sous la forme de particules possédant un diamètre de 0,5 à 300 microns.

20. Utilisation d'une polygalactomannane gonflable dans l'eau en tant que matériau bloquant l'eau pour enrober une fibre, ladite polygalactomannane étant exempte d'eau.

21. Utilisation suivant la revendication 20, dans laquelle la polygalactomannane est dispersée dans une huile.

## Patentansprüche

1. Faser, beschichtet mit einem wasserblockierenden Material, umfassend wasserquellbares Polygalactomannan, wobei das Polygalactomannan wasserfrei ist.

2. Faser nach Anspruch 1, wobei das Polygalactomannan Johannisbrotmehl, Guarmehl oder Gemische davon sind.

3. Faser nach Anspruch 1 oder Anspruch 2, wobei das Polygalactomannan in einem Anteil von 0,05 bis 10 Gewichtsprozent, bezogen auf das Gewicht der unbeschichteten Faser, vorhanden ist.

4. Faser nach Anspruch 1 oder Anspruch 2, wobei das Polygalactomannan in einem Anteil von 0,1 bis 5 Gewichtsprozent, bezogen auf das Gewicht der unbeschichteten Faser, vorhanden ist.

5. Faser nach einem der Ansprüche 1 bis 4, wobei das Polygalactomannan in der Form von Teilchen mit einem Durchmesser von 0,5 bis 300 Mikrometern ist.

6. Faser nach einem der Ansprüche 1 bis 4, wobei das Polygalactomannan in der Form von Teilchen mit einem Durchmesser von 0,5 bis 60 Mikrometern ist.

7. Faser nach einem der Ansprüche 1 bis 4, wobei das Polygalactomannan in der Form von Teilchen mit einem Durchmesser von 0,5 bis 15 Mikrometern ist.

8. Faser nach einem der Ansprüche 1 bis 7, wobei das Polygalactomannan in einem dispergierenden Medium dispergiert ist.

9. Faser nach Anspruch 8, wobei das dispergierende Medium ein Öl, ein organisches Lösungsmittel oder ein Glycol ist.

10. Faser nach einem der Ansprüche 1 bis 9, wobei die Faser eine Glasfaser, eine Aramidfaser oder Gemische davon sind.

11. Faser nach einem der Ansprüche 1 bis 9, wobei die Faser Poly(p-phenylenterephthalamid) einschließt.

12. Garn, umfassend eine Mehrzahl der Fasern nach einem der Ansprüche 1 bis 11.

13. Fasermaterial, umfassend eine Mehrzahl der Fasern nach einem der Ansprüche 1 bis 11.

14. Faseroptisches Kabel, umfassend Glasfaserwellenleitungen, wobei die Leitungen mit einem Garn, umfassend eine Faser nach einem der Ansprüche 1 bis 11, umgeben sind.

15. Verfahren zum Beschichten einer Faser mit einem wasserblockierenden Material, umfassend Bereitstellen einer Faser und Aufbringen einer Dispersion eines wasserquellbaren Polygalactomannans in einem organischen dispergierenden Medium auf die Oberfläche der Faser, wobei das Polygalactomannan wasserfrei ist.

16. Verfahren nach Anspruch 15, weiterhin umfassend den Schritt, das dispergierende Medium von der Faser zu entfernen.

17. Verfahren nach Anspruch 15 oder Anspruch 16, weiterhin umfassend Aufbringen der Dispersion eines Polygalactomannans in einem dispergierenden Medium auf die Oberfläche der Faser, derart, daß der Anteil des Polygalactomannans auf der Faser von 0,05 bis 10 Gewichtsprozent, bezogen auf das Gewicht der unbeschichteten Faser, beträgt.

18. Verfahren nach einem der Ansprüche 15 bis 17, umfassend Bereitstellen einer Dispersion, welche 0,5 bis 70 Gewichtsprozent Polygalactomannan einschließt.

19. Verfahren nach einem der Ansprüche 15 bis 18, weiterhin umfassend Bereitstellen einer Dispersion, wobei das Polygalactomannan in der Form von Teilchen mit einem Durchmesser von 0,5 bis 300 Mikrometern ist.

20. Verwendung von wasserquellbarem Polygalactomannan als wasserblockierendes Material, um eine Faser zu beschichten, wobei das Polygalactomannan wasserfrei ist.

21. Verwendung gemäß Anspruch 20, wobei das Polygalactomannan in einem Öl dispergiert ist.
